# EUROPÄISCHE PATENTSCHRIFT

(11) **EP 1 159 121 B1**
(45) Veröffentlichungstag und Bekanntmachung des Hinweises auf die Patenterteilung: **29.01.2003**
(21) Anmeldenummer: 00912241.7
(22) Anmeldetag: 02.03.2000
(51) Int. Cl.: B29C 47/76

(54) **VORRICHTUNG ZUR ENTGASUNG VON SCHMELZE**
DEVICE FOR DEGASSING MELTS
DISPOSITIF DE DEGAZAGE DE MATIERE EN FUSION

(30) Priorität: 05.03.1999 AT 37799
(43) Veröffentlichungstag der Anmeldung: 05.12.2001
(73) Patentinhaber: STARLINGER & CO. GESELLSCHAFT MBH, 1060 Wien (AT)
(72) Erfinder: STARLINGER HUEMER, Franz, A-1060 Wien (AT)
(74) Vertreter: Margotti, Herwig Franz
(86) Internationale Anmeldenummer: AT0000055
(87) Internationale Veröffentlichungsnummer: WO00053391

(56) Entgegenhaltungen:
- US-A- 3 346 919
- US-A- 3 410 938
- US-A- 3 913 796
- US-A- 5 494 425
- PATENT ABSTRACTS OF JAPAN vol. 009, no. 282 (M-428), 9. November 1985 (1985-11-09) & JP 60 124232 A (MASAO MORIYAMA), 3. Juli 1985 (1985-07-03)
- PATENT ABSTRACTS OF JAPAN vol. 1999, no. 04, 30. April 1999 (1999-04-30) & JP 11 019999 A (SEKISUI CHEM CO LTD), 26. Januar 1999 (1999-01-26)

## Beschreibung

Die Erfindung betrifft eine Vorrichtung zur Entgasung von Schmelze, insbesondere Kunststoffschmelze, umfassend eine Schmelzedüse, die einen Eingangsanschluß zur Verbindung mit einer Schmelzezufuhr und eine Schmelzeaustrittsöffnung aufweist, und einen durch im wesentlichen gasundurchlässige Wände definierten Entgasungsraum, der mit einer Vakuumquelle kommuniziert und der in einer Austragsöffnung zur im wesentlichen dichten Verbindung mit einem Schmelzeverarbeitungssystem mündet, wobei sich die Schmelzeaustrittsöffnung der Düse in den Entgasungsraum erstreckt.

Eine solche Vorrichtung zur Entgasung von Kunststoffschmelze ist aus einem Extrudersystem bekannt Dabei wird in einem Extruder Kunststoffgranulat unter Hitze und Druck geschmolzen und diese Schmelze aus dem Extruder ausgestoßen. Die Schmelze ist jedoch nicht homogen, sondern enthält Lufteinschlüsse, die eine weitere Verarbeitung der Schmelze erschweren. Aus diesem Grund muß die Schmelze entgast, das heißt von Luft- und anderen Caseinschlüssen befreit werden. Dies kann in der einfachsten Weise dadurch erreicht werden, daß an die Extruderaustragsöffnung ein Vakuumabschnitt angeschlossen ist, durch den die Schmelze strömt. Durch den Unterdruck im Vakuumabschnitt werden Gasbläschen aus der Schmelze herausgezogen und abgeführt Dieses Verfahren funktioniert aufgrund der hohen Viskosität der Schmelze nur sehr unvollkommen und erfordert weiters ein Hochvakuum, um auch aus dem zentralen Bereich der Schmelze noch die Gasbläschen herausziehen zu können. Hochvakuumapparaturen sind jedoch sehr teuer und empfindlich und verlangen häufige Wartung. Außerdem sind die abgezogenen Gase heiß (typisch 250°C bis 260°C) und enthalten oft aggresive verdampfte Kunststoffzusätze, die die Apparaturen angreifen, sodaß es unter Umständen nötig ist, sie mehrmals im Jahr auszutauschen.

Um die Notwendigkeit der Verwendung von Hochvakuum reduzieren zu können, wurde daher, wie aus der US 3 410 938 A oder der parallelen CH 425 207 A bekannt, eine Vorrichtung der eingangs erwähnten Art entwickelt, bei der der Schmelzestrom zunächst durch eine an den Extruderausgang angeschlossene Düse fließt, die eine Düsenplatte mit einer Vielzahl an runden Durchgangslöchern oder Schlitzen aufweist, wodurch der Schmelzestrom in eine Vielzahl an "spaghetti"-artigen oder bandförmigen Teilströmen unterteilt wird. Stromabwärts von der Düsenplatte ist ein Entgasungsraum angeschlossen, der unter Vakuum steht und durch den die Schmelze-Teilströme nach Verlassen der Düse fließen. Da der Durchmesser der Schmelze-Teilströme geringer ist als jener des Gesamtstromes, ist kein so hohes Vakuum nötig wie bei der direkten Entgasung des Schmelze-Gesamtstromes. Allerdings ist auch diese Vorrichtung in der Praxis mit Nachteilen verbunden, denn Untersuchungen der Erfinder des vorliegenden Anmeldungsgegenstandes führten zur Erkenntnis, daß die Schmelze-Teilströme nach Verlassen der Düsenplatte eine starke Tendenz aufweisen, aneinander anzuhaften und sich somit wieder zu einem dickeren Strom zu verbinden, wodurch das eingesetzte Vakuum nicht ausreicht, um auch die Gasbläschen aus dem Schmelzeinneren herauszuziehen.

Die vorliegende Erfindung beruht auf dieser Erkenntnis und bietet eine Lösung für eine zufriedenstellende Entgasung von Schmelze an, bei der die Nachteile des Standes der Technik vermieden werden und gleichzeitig das notwendige Vakuum weiter verringert werden kann. Die Erfindung geht dabei von dem Ansatz aus, daß eine Unterteilung der Schmelze in Teilströme nicht zum gewünschten Ergebnis führen kann, da das nachfolgende Wieder-Verbinden der Teilströme nicht durch vertretbar geringen Aufwand beherrscht werden kann. Die Erfindung hält daher den Gesamt-Schmelzestrom aufrecht, formt ihn jedoch in eine Querschnittsgestalt mit sehr geringer Dicke um, indem die Schmelzeaustrittsöffnung der Düse als ein einziger Schlitz ausgebildet ist, dessen Länge ein Vielfaches seiner Breite beträgt und der eine gekrümmte oder gefaltete Konfiguration aufweist, um die erforderliche Länge des Schlitzes in der Düsenplatte unterzubringen. Durch diese erfindungsgemäße Maßnahme ist es möglich, die Schmelze bereits mit geringem Vakuum zufriedenstellend zu entgasen, denn die Gasbläschen müssen nur mehr aus sehr geringer Schmelzetiefe an die Oberfläche der Schmelze gezogen werden bzw. platzen aufgrund der geringen Dicke des Schmelzestroms von selbst auf.

Es erweist sich als zweckmäßig, wenn der Schlitz eine Länge aufweist, die um zumindest das 50-fache, bevorzugt zumindest das 500-fache, größer ist als seine Breite. In manchen Anwendungen kann es auch als angemessen angesehen werden, wenn das Verhältnis zwischen Länge und Breite auf 5000:1 und darüber erhöht wird.

Zur weiteren Reduzierung der Höhe des notwendigen Vakuums kann vorgesehen sein, daß die Breite des Schlitzes weniger als 2 mm, bevorzugt weniger als 0,1 mm, beträgt.

Um den Schmelzedurchsatz von der Schmelzezufuhr, z.B. aus einem Extruder, zu nachfolgenden Verarbeitungseinrichtungen nicht durch die zwischengeschaltete Entgasungsvorrichtung einzuschränken, darf eine vorgegebene Querschnittsfläche des Schlitzes nicht unterschritten werden. Da die Breite des Schlitzes nicht ohne nachteilige Auswirkungen auf das Entgasungsvermögen der erfindungsgemäßen Vorrichtung erhöht werden kann, muß somit die Länge des Schlitzes auf einen geeigneten Wert eingestellt werden. Um dies zu erreichen, ohne dabei gleichzeitig die Gesamtgröße der Düse ungebührlich zu erhöhen, ist eine Ausgestaltung der Erfindung dadurch gekennzeichnet, daß der Schlitz in seiner Längserstreckung zickzackförmig oder gewellt ausgebildet ist.

Eine besonders günstige Fortbildung der erfindungsgemäßen Vorrichtung ergibt sich, wenn der Schlitz als Ring ausgebildet ist, da in diesem Fall die Düse durch Drehen hergestellt werden kann und ihre Gesamtdimensionen klein gehalten werden können. Falls eine weitere Vergrößerung der Schlitzlänge erforderlich ist, kann natürlich auch der ringförmige Schlitz gewellt oder in Zickzackform ausgebildet werden.

Um bei Ausbilden des Schlitzes als Ring nicht den Nachteil in Kauf nehmen zu müssen, daß auf den so erzeugten Schmelzeschlauch beim Hindurchströmen durch den Entgasungsraum nur an seiner Außenseite Vakuum einwirkt, ist eine besonders bevorzugte Ausgestaltung der Erfindung dadurch gekennzeichnet, daß die Düse eine sich in das Ringinnere des Schlitzes erstreckende Durchgangsöffnung aufweist, die mit einer Vakuumquelle kommuniziert. Durch diese Maßnahme wird der Schmelzeschlauch von außen und innen gleichzeitig unter Vakuum gesetzt, was bei der geringen Wandstärke des Schmelzeschlauchs einen hohen Wirkungsgrad der erfindungsgemäßen Entgasungsvorrichtung sicherstellt. Es vereinfacht die Konstruktion der Vorrichtung, wenn die in das Ringinnere des Schlitzes mündende Durchgangsöffnung der Düse mit derselben Vakuumquelle kommuniziert wie der Entgasungsraum.

Um die Dicke der aus dem Schlitz austretenden Schmelze je nach Einsatzzweck und Materialeigenschaften der Schmelze variieren zu können, ist erfindungsgemäß weiters vorgesehen, die Düse mit austauschbaren Einsätzen für unterschiedlich gestaltete und/oder dimensionierte Schlitze auszustatten.

Das Hindurchfließen der Schmelze durch die Entgasungsvorrichtung wird erleichtert, wenn die Düse und/oder der Entgasungsraum mit Heizeinrichtungen versehen sind/ist.

Um den Entgasungsvorgang kontrollieren zu können, kann in den den Entgasungsraum definierenden Wänden mindestens ein Sichtfenster angeordnet sein.

Günstigerweise ist am Eingangsanschluß der Düse ein Filter zur Ausfilterung von Fremdkörpern aus dem Schmelzestrom vorgesehen. Somit kann verhindert werden, daß Fremdkörper in die Entgasungsvorrichtung gelangen, die sich besonders dann störend auswirken würden, wenn sie bei den in der Entgasungsvorrichtung herrschenden Temperaturen entflammbar sind, da bei ihrer Verbrennung unerwünschte Verbrennungsgase entstünden.

In einer besonders bevorzugten Ausgestaltung umfaßt die erfindungsgemäße Vorrichtung als Vakuumquelle eine Venturi-Strahlpumpe. Eine solche Pumpe enthält keine beweglichen Teile, sondern es wird durch das Hindurchströmen eines Fluids durch ein Venturi-Rohr im Rohr ein Unterdruck erzeugt, der Fluid aus einem Seiteneingang in das Rohr, d.h. im vorliegenden Fall die abzuziehenden Gase aus dem Entgasungsraum, anzieht. Das Venturi-Rohr kann innen leicht korrosionsfest beschichtet werden, damit es den aggresiven Bestandteilen des abzuziehenden Gases standhält.

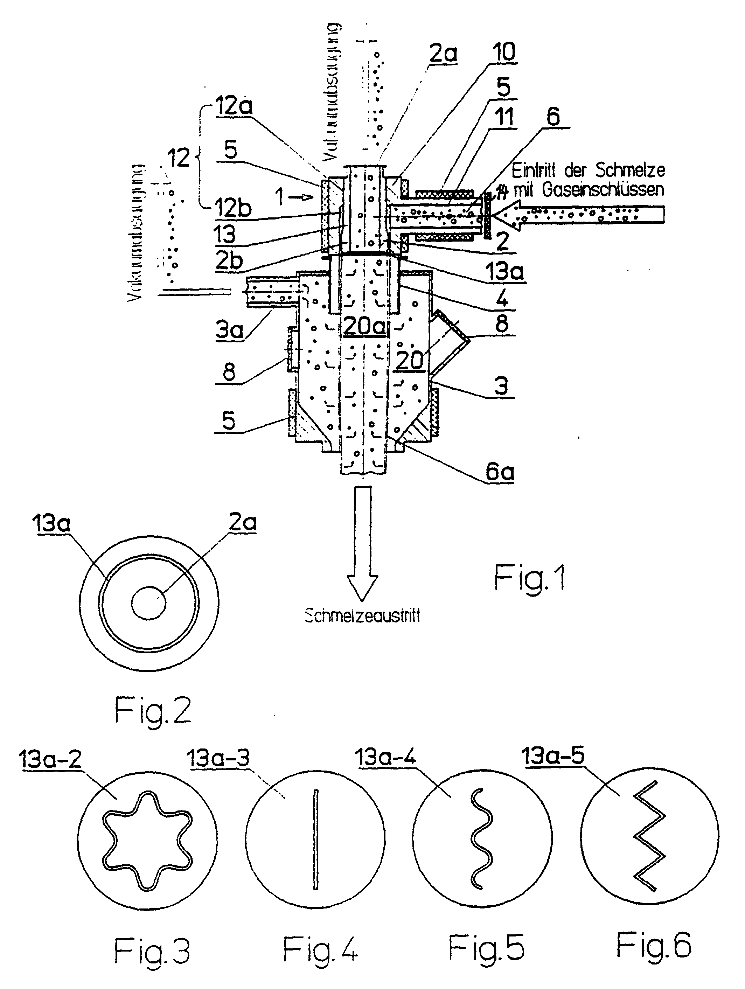

Die Erfindung wird nun anhand eines nicht einschränkenden Ausführungsbeispiels unter Bezugnahme auf die beiliegenden Zeichnungen im Detail beschrieben, worin Fig. 1 eine Ausführungsform der erfindungsgemäßen Vorrichtung zur Entgasung von Schmelze im Längschnitt zeigt, und die Figuren 2 bis 6 verschiedene Ausführungsformen des Schlitzes der Düse in schematischer Draufsicht zeigen.

Die in Fig. 1 im Längsschnitt dargestellte Ausführungsform der erfindungsgemäßen Vorrichtung zur Entgasung von Schmelze ist als Entgasungskopf ausgebildet, der einem Kunststoff-Extruder nachgeschaltet ist, um die vom Extruder erzeugte Kunststoffschmelze von Gaseinschlüssen zu befreien. Die Vorrichtung weist eine allgemein mit 1 bezeichnete Düse sowie stromabwärts davon einen allgemein mit 20 bezeichneten Entgasungsraum auf. Die Düse 1 besitzt einen allgemein hohlzylindrischen Körper 10, in den radial ein hohler Stutzen 11 mündet, der an die Austragsöffnung eines nicht dargestellten Kunststoff-Extruders o.dgl. angeschlossen werden kann. Sowohl der Düsenkörper 10 als auch der Stutzen 11 sind an ihren Außenseiten von Heizelementen 5 umgeben. Am Stutzen ist weiters ein Filter 14 vorgesehen, um im Schmelzestrom enthaltene Fremdkörper, insbesondere endzündbare Fremdkörper wie Papier, aus dem Schmelzestrom zu entfernen und somit wirkungsvoll zu verhindern, daß sich die Fremdkörper in der Entgasungsvorrichtung entzünden oder die Düsenkanäle verstopfen. Der Düsenkörper weist eine axiale Durchgangsbohrung 12 auf, die einen ersten, stromaufwärtigen Abschnitt 12a und einen stromabwärts davon befindlichen zweiten Abschnitt 12b mit einem gegenüber dem ersten Abschnitt 12a vergrößertem Radius besitzt. Vom stromabwärtigen Ende der Durchgangsbohrung 12 ist ein hohlzylindrischer Düseneinsatz 2 in die Durchgangsbohrung 12 eingesetzt, wobei eine Durchgangsbohrung des Düseneinsatzes 2 mit dem Bezugszeichen 2a bezeichnet ist. Der Außenradius des Mantels des Düseneinsatzes 2 entspricht dem Radius des Abschnittes 12a der Durchgangsbohrung 12 des Düsenkörpers 10, sodaß der Düseneinsatz eng in den Abschnitt 12a im Düsenkörper eingepaßt werden kann. Zwischen der Wand des erweiterten Abschnitts 12b der Durchgangsbohrung 12 des Düsenkörpers 10 und und der Außenperipherie des Mantels des Düseneinsatzes 2 entsteht jedoch ein Ringspalt 13, da der Radius des Mantels des Düseneinsatzes zunächst konstant ist und sich erst nahe seinem stromabwärtigen Ende hin vergrößert (bei 2b angezeigt), um den Ringspalt 13 auf die für die Schmelzeaustrittsöffnung 13a erwünschte Breite zu reduzieren. Der Stutzen 11 mündet in diesen Ringspalt 13. Durch den Stutzen 11 in die Düse 2 eintretende Schmelze 6 verteilt sich im Ringspalt 13 und tritt an seinem stromabwärtigen Ende, d.h. an der Schmelzeaustrittsöffnung 13a, als Schmelzeschlauch 6a mit sehr geringer Dicke aus. Es ist anzumerken, daß der Düseneinsatz 2 gegen anders dimensionierte Einsätze austauschbar ist, um die Größe des Ringspalts bzw. der Schmelzeaustrittsöffnung einzustellen.

An den Ausgang der Düse 2 ist über ein Verbindungsrohr 4 ein Entgasungsrohr 3 vakuumdicht angeschlossen, das in seinem Inneren einen Entgasungsraum 20 definiert, der über einen Anschluß 3a des Entgasungsrohres 3 mit einer nicht dargestellten Vakuumquelle kommuniziert. Es ist anzumerken, daß der Begriff Vakuum, wie hierin verwendet, jeden geeigneten Unterdruck umfaßt. Der aus der Düse 2 austretende, mit Gaseinschlüssen behaftete Schmelzeschlauch 6a strömt somit in den Entgasungsraum 20, wo aufgrund des herrschenden Unterdrucks Gasbläschen aus dem Schmelzeinneren an die Oberfläche und dann durch den Anschluß 3a nach außen abgezogen werden, wie durch die Bläschen und kleinen Pfeile im Entgasungsraum bzw. durch den großen Pfeil mit danebenliegenden Bläschen neben dem Anschluß 3a dargestellt. Aufgrund der Konfiguration der durchströmenden Schmelze als kontinuierlicher Schlauch ist jedoch der Innenraum 20a des Schmelzeschlauches 6a vom Entgasungsraum 20 abgeschlossen. Es ist jedoch wünschenswert, auch den Innenraum 20a unter denselben Unterdruck zu setzen wie den Entgasungsraum 20, um auch vom Innenraum 20a aus die Entgasung der Schmelze durchzuführen und ein Aufblähen des Schmelzeschlauches durch Druckunterschiede zwischen dessen Innen- und Außenseite zu verhindern. Aus diesem Grund wurde im Düseneinsatz 2 die Durchgangsbohrung 2a vorgesehen, die mit einer nicht dargestellten Vakuumquelle verbunden wird. Zweckmäßig ist dabei die Vakuumquelle dieselbe, mit der der Anschluß 3a des Entgasungsrohrs 3 verbunden ist, wodurch Druckunterschiede zwischen Innen- und Außenseite des Schmelzeschlauches verhindert werden. Da die Vakuumquelle aufgrund der geringen Wandstärke des Schmelzeschlauches kein besonders hohes Vakuum zur Entgasung liefern muß, kann ein Seitengebläse oder eine Venturi-Strahlpumpe zum Einsatz kommen. Die Verwendung einer Venturi-Strahlpumpe (auch als Venturi-System oder Strahlejektorpumpe bekannt) wird bevorzugt, da sie keine bewegten Teile enthält und leicht korrosionsfest beschichtet werden kann, wodurch sie gegenüber anderen Typen von Vakuumpumpen mit einer wesentlich längeren Lebensdauer besticht.

Der Fortschritt der Entgasung des Schmelzeschlauches 6a kann über Sichtfenster 8 im Entgasungsrohr 3 kontrolliert werden. Auch das Entgasungsrohr 3 ist von einer Heizeinrichtung 5 umgeben. Während des Hindurchfließens des Schmelzeschlauches 6a durch den Entgasungsraum werden kontinuierlich Gasbläschen aus der Schmelze gezogen und abgeführt, sodaß der Schmelzeschlauch bei Erreichen des stromabwärtigen Endes des Entgasungsraums zufriedenstellend entgast worden ist und damit einer weiteren Verarbeitung zugeführt werden kann. Beispielsweise kann an das Entgasungsrohr in vakuumdichter Weise ein Austragsextruder angeschlossen sein. In jedem Fall wird das Entgasungsrohr jedoch durch eine nachfolgende Verarbeitungsstation vakuumdicht abgeschlossen.

Neben der ausführlich erläuterten Ausführungsform der Düse mit kreisringförmiger Schmelzeaustrittsöffnung 13a, wie sie in Fig. 2 schematisch in Draufsicht vom stromabwärtigen Düsenende dargestellt ist, können auch andere Konfigurationen von Schmelzeaustrittsöffnungen verwendet werden. Beispiele dafür sind in den Figuren 3 bis 6 schematisch in Draufsicht zu sehen, die in dieser Reihenfolge eine gewellte ringförmige Schmelzeaustrittsöffnung 13a-2, eine gerade Schmelzeaustrittsöffnung 13a-3, die nicht in den Schutzbereich der Erfindung fällt, eine allgemein gerade, aber mit Wellungen verlaufende Schmelzeaustrittsöffnung 13a-4 und eine zickzackförmige Schmelzeaustrittsöffnung 13a-5 zeigen. Diese Schmelzeaustrittsöffnungen können auch durch Vorsehen entsprechend geformter austauschbarer Düseneinsätze ausgebildet werden, wobei bei den Ausführungsformen der Figuren 4 bis 6 darauf zu achten ist, daß sich durch geeignete konstruktive, dem Fachmann auf dem Gebiet der Extrudertechnik bekannte Maßnahmen an den Kanälen im Düseninneren die Schmelze über die gesamte Breite der Schmelzeaustrittsöffnung verteilt.

## Patentansprüche

1. Vorrichtung zur Entgasung von Schmelze, insbesondere Kunststoffschmelze, umfassend eine Schmelzedüse (1), die einen Eingangsanschluß (11) zur Verbindung mit einer Schmelzezufuhr und eine Schmelzeaustrittsöffnung aufweist, und einen durch im wesentlichen gasundurchlässige Wände definierten Entgasungsraum (20), der mit einer Vakuumquelle kommuniziert und der in einer Austragsöffnung zur im wesentlichen dichten Verbindung mit einem Schmelzeverarbeitungssystem mündet, wobei sich die Schmelzeaustrittsöffnung (13a) der Düse (1) in den Entgasungsraum erstreckt und als Schlitz ausgebildet ist, dessen Länge ein Vielfaches seiner Breite beträgt, **dadurch gekennzeichnet, daß** ein einziger Schlitz vorgesehen ist, der eine gekrümmte oder gefaltete Konfiguration aufweist.

2. Vorrichtung nach Anspruch 1, **dadurch gekennzeichnet, daß** der Schlitz eine Länge aufweist, die um zumindest das 50-fache, bevorzugt zumindest das 500-fache, größer ist als seine Breite.

3. Vorrichtung nach Anspruch 1 oder 2, **dadurch gekennzeichnet, daß** die Breite des Schlitzes weniger als 2 mm, bevorzugt weniger als 0,1 mm, beträgt.

4. Vorrichtung nach einem der vorhergehenden Ansprüche, **dadurch gekennzeichnet, daß** der Schlitz in seiner Längserstreckung zickzackförmig oder gewellt ausgebildet ist.

5. Vorrichtung nach einem der vorhergehenden Ansprüche, **dadurch gekennzeichnet, daß** der Schlitz ringförmige Gestalt aufweist.

6. Vorrichtung nach Anspruch 5, **dadurch gekennzeichnet, daß** die Düse (1) eine sich in das Ringinnere des Schlitzes erstreckende Durchgangsöffnung (2a) aufweist, die mit einer Vakuumquelle kommuniziert.

7. Vorrichtung nach Anspruch 6, **dadurch gekennzeichnet, daß** die in das Ringinnere des Schlitzes mündende Durchgangsöffnung (2a) der Düse mit derselben Vakuumquelle kommuniziert wie der Entgasungsraum (20).

8. Vorrichtung nach einem der vorhergehenden Ansprüche, **dadurch gekennzeichnet, daß** die Düse (1) austauschbare Einsätze (2) für unterschiedlich gestaltete und/oder dimensionierte Schmelzeaustrittsöffnungen aufweist.

9. Vorrichtung nach einem der vorhergehenden Ansprüche, **dadurch gekennzeichnet, daß** die Düse (1) und/oder der Entgasungsraum (20) mit Heizeinrichtungen versehen sind/ist.

10. Vorrichtung nach einem der vorhergehenden Ansprüche, **dadurch gekennzeichnet, daß** in den Entgasungsraum (20) definierenden Wänden (3) mindestens ein Sichtfenster (8) angeordnet ist.

## Claims

1. A device for degassing melts, in particular plastic melts, comprising a melt nozzle (1) which has an inlet connection (11) for connecting to a melt supply and a melt outlet opening, as well as a degassing chamber (20) defined by essentially gas-impermeable walls which communicates with a vacuum source and which opens into a discharge opening for an essentially tight connection to a melt processing system, the melt outlet opening (13a) of the nozzle (1) extending into the degassing chamber and being configured as a slit whose length is a multiple of its width, **characterized in that** the slit is formed as one single slit with curved or folded configuration.

2. The device according to claim 1, **characterized in that** the slit has a length which is at least 50 times, preferably at least 500 times as large as its width.

3. The device according to claim 1 or claim 2, **characterized in that** the width of the slit is less than 2 mm, preferably less than 0,1 mm.

4. The device according to any of the preceding claims, **characterized in that** the slit has a zigzag or a corrugated configuration in its longitudinal direction.

5. The device according to any of the preceding claims, **characterized in that** the slit is of annular configuration.

6. The device according to claim 5, **characterized in that** the nozzle (1) has a through-hole (2a) extending into the interior of the ring of the slit, which through-hole communicates with a vacuum source.

7. The device according to claim 6, **characterized in that** the through-hole (2a) of the nozzle opening into the interior of the ring of the slit communicates with the same vacuum source as the degassing chamber (20).

8. The device according to any of the preceding claims, **characterized in that** the nozzle (1) has replaceable inserts (2) for melt outlet openings of different configurations and/or dimensions.

9. The device according to any of the preceding claims, **characterized in that** the nozzle (1) and/or the degassing chamber (20) is/are provided with heating means.

10. The device according to any of the preceding claims, **characterized in that** at least one viewing window (8) is arranged in the walls (3) defining the degassing chamber (20).

## Revendications

1. Dispositif de dégazage de matière en fusion, en particulier de matière plastique en fusion, comprenant une buse pour matière en fusion (1) qui comporte un raccord d'entrée (11) pour la liaison à une alimentation de matière en fusion et une ouverture de sortie de matière en fusion, et une chambre de dégazage (20) définie par des parois sensiblement imperméables aux gaz, laquelle communique avec une source de vide et débouche dans une ouverture d'extraction en vue d'une liaison sensiblement étanche avec un système de traitement de matière en fusion, dans lequel l'ouverture de sortie de matière en fusion (13a) de la buse (1) s'étend jusque dans la chambre de dégazage et est réalisée sous forme d'une fente dont la longueur s'élève à un multiple de sa largeur, **caractérisé en ce qu'**il est prévu une fente unique qui présente une configuration incurvée ou repliée.

2. Dispositif selon la revendication 1, **caractérisé en ce que** la fente a une longueur qui est au moins 50 fois, et de préférence au moins 500 fois plus élevée que sa largeur.

3. Dispositif selon l'une ou l'autre des revendications 1 et 2, **caractérisé en ce que** la largeur de la fente est inférieure à 2 mm et de préférence inférieure à 0,1 mm.

4. Dispositif selon l'une des revendications précédentes, **caractérisé en ce que** la fente est réalisée en forme de zigzag ou en forme ondulée dans son extension longitudinale.

5. Dispositif selon l'une des revendications précédentes, **caractérisé en ce que** la fente a une configuration annulaire.

6. Dispositif selon la revendication 5, **caractérisé en ce que** la buse (1) comporte une ouverture traversante (2a) qui s'étend jusque dans l'intérieur de la fente annulaire et qui communique avec une source de vide.

7. Dispositif selon la revendication 6, **caractérisé en ce que** l'ouverture traversante (2a) de la base, qui débouche dans l'intérieur de la fente annulaire, communique avec la même source de vide que la chambre de dégazage (20).

8. Dispositif selon l'une des revendications précédentes, **caractérisé en ce que** la buse (1) comprend des inserts interchangeables (2) pour produire des ouvertures de sortie de matière en fusion de configuration et/ou de dimensions différentes.

9. Dispositif selon l'une des revendications précédentes, **caractérisé en ce que** la buse (1) et/ou la chambre de dégazage (20) est/sont pourvue(s) de dispositifs de chauffage.

10. Dispositif selon l'une des revendications précédentes, **caractérisé en ce qu'**il est prévu au moins une fenêtre d'observation (8) dans les parois (3) qui définissent la chambre de dégazage (20).
